# EUROPEAN PATENT APPLICATION

(11) **EP 2 402 595 A2**
(43) Date of publication of application: **04.01.2012**
(21) Application number: 11172016.5
(22) Date of filing: 29.06.2011
(51) Int. Cl.: F03D 1/06

(54) **Wind turbine blades with actively controlled flow through vortex elements.**

(30) Priority: 02.07.2010 US 829456
(71) Applicant: General Electric Company, Schenectady, NY 12345 (US)
(72) Inventor: Santiago, Pedro Luis Benito, 28933 Mostoles (ES); Segovia, Eugenio Yegro, 28879 Serraniffos del Valle (ES); Spijkerboer, Timo Gerrit, 7521 BE Enschede (NL)
(74) Representative: Bedford, Grant Richard

(57) **Abstract**

A wind turbine blade (16) includes a suction side surface (30) and a pressure side surface (32). A plurality of vortex elements (40) are formed on at least one of the suction side or pressure side surfaces. An active flow control system (38) is operably configured with the vortex elements so as to direct pressurized air through the vortex elements and along the blade surface. The aerodynamic performance of the blade is modified by a combined effect of the vortex elements and the active flow control system.

## Description

The present invention relates generally to the field of wind turbines, and more particularly to turbine blades having an aerodynamic surface configuration.

Turbine blades are the primary elements of wind turbines for converting wind energy into electrical energy. The blades have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is geared to a generator for producing electricity.

Air flow over the leading edge of the blade is mainly laminar in an "attached-flow" region. The lift force is generated primarily in this attached-flow region. As the air moves towards the trailing edge of the blade, flow separation occurs and the air flow transitions to a "detached-flow" region where the flow is more turbulent. Flow separation depends on a number of factors, such as incoming air flow characteristics (e.g., Reynolds number, wind speed, in-flow atmospheric turbulence, etc.) and characteristics of the blade (e.g., airfoil sections, blade chord and thickness, twist distribution, pitch angle, etc). The detached-flow region also leads to an increase in drag force, mainly due to a pressure difference between the upstream attached-flow region and the downstream detached-flow region.

Hence, it is generally desirable to increase the energy conversion efficiency during normal operation of the wind turbine by increasing the lift force while decreasing the drag force. To this purpose, it is advantageous to increase the attached-flow region and to reduce the detached-flow region by having the flow separation nearer the trailing edge of the blade, i.e. in a downstream region of the blade. Also, it is generally desired to have a stable flow separation to increase the working stability and decrease noise generation of the blade.

It is known in the art to change the aerodynamic characteristics of wind turbine blades by adding dimples, protrusions, or other structures on the surface of the blade. These structures are sometimes referred to as "vortex generators." These devices improve the aerodynamic performance of a blade by inducing mixing of the boundary layer with the outer flow, thereby delaying the trailing flow separation while increasing lift and reducing drag at higher angles of attack. Conventional fixed vortex generators are relatively simple and inexpensive to implement, but can also generate some degree of drag. Another disadvantage of fixed vortex generators is that maximum lift is fixed. The design is thus a compromise between increased efficiency at medium wind speeds and the need to maintain peak power by stall regulation of the blade. The vortex generators are also subject to damage during transport and assembly of the wind turbine. Examples of static or fixed vortex generating elements are shown in, for example, WO 2007/065434; WO 00/15961; and U.S. Pat. No. 7,604,461.

Retractable or pivotal vortex generators that are deployed relative to the surface of a blade are also known. Reference is made, for example, to U.S. Pat. No 4,039,161; U.S. Pat. No. 5,253,828; U.S. Pat. No. 6,105,904; U.S. Pat. No. 6,427,948; U.S. Pat. No. 7,293,959; EP 1 896 323 B1; and WO 2007/005687.

It is also known in the art to enhance the aerodynamic performance of a blade or airfoil by introducing a pulsed or continuous supply of pressurized air at a skewed angle into the boundary layer flow over the blade's surface. This augmenting air tends to entrain the boundary layer and delays the onset of flow separation. The net effect is an increased flow over the blade surface with the accompanying increase in lift, as with vortex generators. This principle is often referred to in the art as "Circulation Control," "Active Circulation Control," or "Active Flow Control." In wind turbine applications, the Circulation Control typically works by urging pressurized air into a duct and out a slot in the blade. Reference is made, for example, to U.S. Pat. App. No. 2010/0104436 and U.S. Pat. App. No. 2007/0231151.

Although the vortex generators and flow circulation systems discussed in the references cited offer unique aerodynamic characteristics, the industry would benefit from a turbine blade that takes effective advantage of a combination of the two concepts in a single component without detrimentally adding to the cost or complexity of the blade.

Various aspects and advantages of the invention will be set forth in part in the following description, or may be clear from the description, or may be learned through practice of the invention.

In accordance with aspects of the invention, a wind turbine blade is provided having a suction side surface and a pressure side surface. A plurality of dynamic vortex elements are formed on either one or both of the surfaces. An active flow control system is operably configured with the vortex elements so as to direct pressurized air through the vortex elements and rearwardly along the surface of the blade. The aerodynamic performance of the blade is thus modified by a combined effect of the vortex elements and the active flow control system.

In a particular embodiment, the vortex elements are dynamic and actuated from a retracted position to an operational position protruding above a neutral surface of the blade. The vortex elements may be actuated by pressurized air supplied by the active flow control system. For example, the active flow control system may, in one embodiment, include a pressurized air manifold within the blade, with the vortex elements in pneumatic communication with the manifold such that the vortex elements are actuated upon switching on the active flow control system and pressurization of the manifold.

The vortex elements may be biased to the retracted position at least partially within the manifold, with the pressurized air supplied to the manifold overcoming the bias and forcing the vortex elements to their actuated, protruding position relative to the surface of the blade. The vortex elements may be biased by any suitable mechanism, such as an elastic component, spring, and the like.

In one unique configuration, the vortex elements include a passage through which the pressurized air is directed. The passage and orientation of the vortex element cause the pressurized air to exit the element at a desired exit angle relative to a local blade chord at the location of the vortex element.

In still a further unique embodiment, the vortex elements are pivotal along a hinge line and lie essentially flat against the blade surface in their retracted position. Upon activation of the active flow control system, pressurized air pushes against the vortex elements and causes the elements to pivot upwardly relative to the blade surface.

With still another embodiment, the vortex elements are static and fixed relative to the blade surface and include air passages defined therethrough through which the pressurized air is directed through and out of the vortex elements at a desired exit angle relative to a local blade chord.

The aerodynamic performance of a blade in accordance with aspects of the invention may be further modified by inclusion of a plurality of vortex generators disposed on the blade surface downstream of the plurality of vortex elements in a direction of airflow over blade surface. In a particular embodiment, these devices may be static vanes that protrude above a neutral surface of the blade at a desired local chord length past a maximum thickness of the blade.

Embodiments of the invention also encompass a wind turbine having one or more turbine blades configured with the vortex elements and active control system as described herein.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention, in which:
Fig. 1 is a perspective view of a conventional wind turbine;
Fig. 2 is a perspective view of an embodiment of a wind turbine blade in accordance with aspects of the invention;
Fig. 3 is a side cut-away view of an embodiment of a wind turbine blade;
Fig. 4 is a side cut-away view of the blade of Fig. 3 with the vortex elements actuated to a deployed state;
Fig. 5 is a side diagrammatic view of an embodiment of a wind turbine blade;
Fig. 6 is a side diagrammatic view of a particular embodiment of a vortex element in a retracted position within a pressure manifold;
Fig. 7 is a side diagrammatic and operational view of the vortex element of Fig. 6 in a protruding operational position;
Fig. 8 is a perspective view of an embodiment of vortex elements in configuration with a pressure manifold;
Fig. 9 is a perspective view of an alternative embodiment of vortex elements in configuration with a pressure manifold;
Fig. 10 is a perspective operational view of the embodiment of Fig. 8; and
Fig. 11 is a perspective operational view of an embodiment of static vortex elements in configuration with a pressure manifold.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention include such modifications and variations as come within the scope of the appended claims and their equivalents.

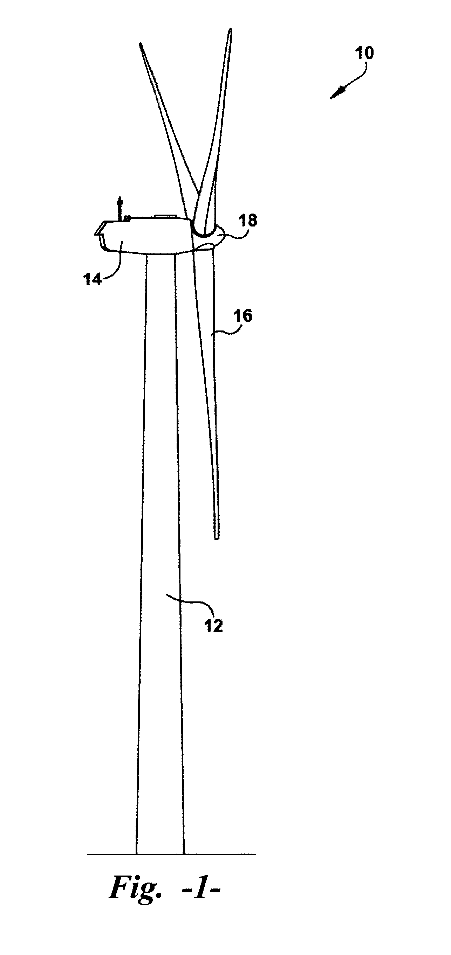

Fig. 1 illustrates a wind turbine 10 of conventional construction. The wind turbine 10 includes a tower 12 with a nacelle 14 mounted thereon. A plurality of turbine blades 16 are mounted to a rotor hub 18, which is in turn connected to a main flange that turns a main rotor shaft. The wind turbine power generation and control components are housed within the nacelle 14. The view of Fig. 1 is provided for illustrative purposes only to place the present invention in an exemplary field of use. It should be appreciated that the invention is not limited to any particular type of wind turbine configuration.

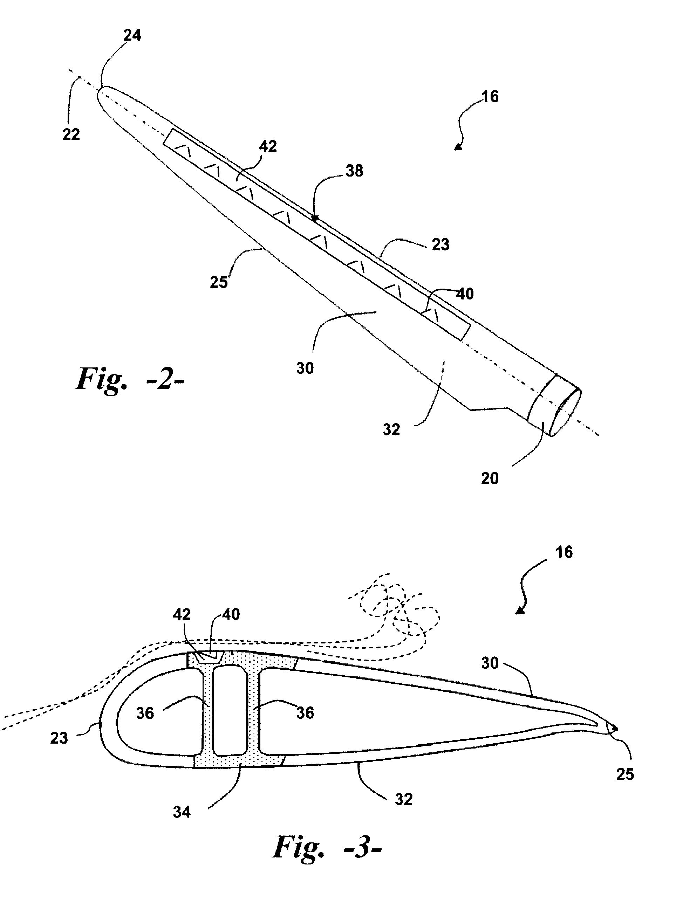

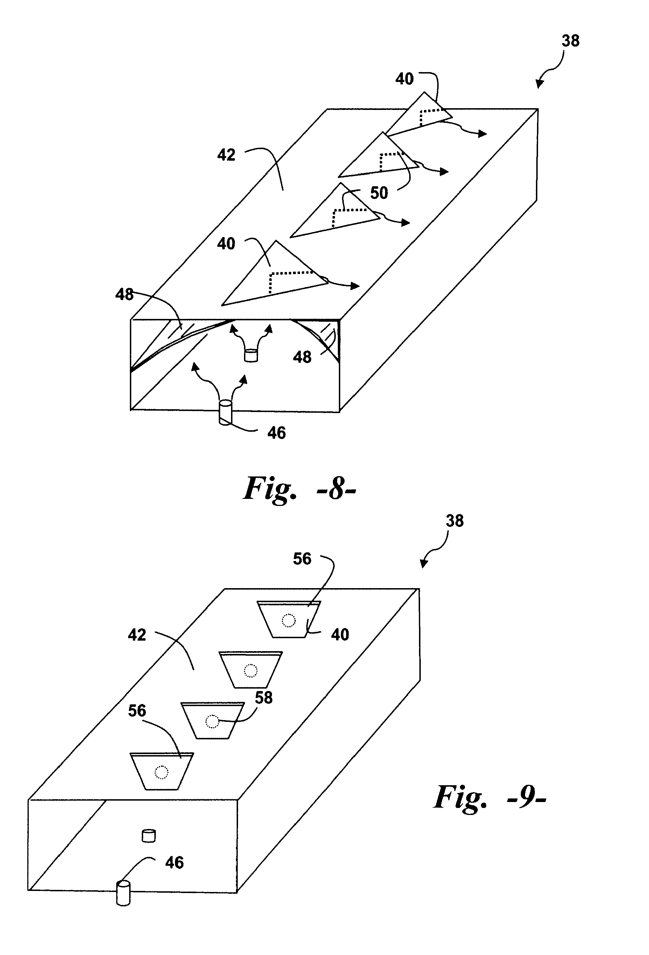

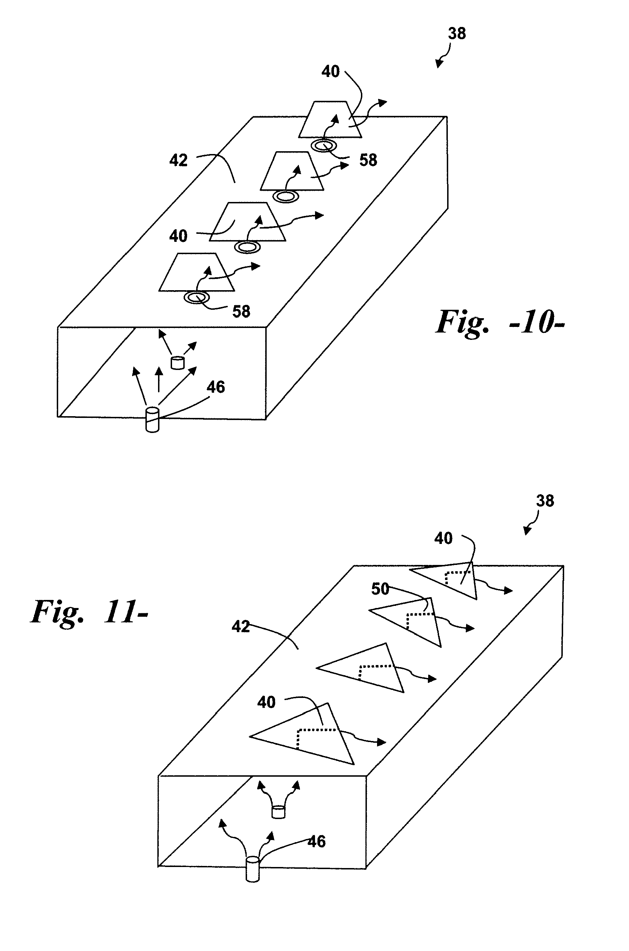

Figs. 2 through 4 depict various embodiments of wind turbine blades 16 incorporating aspects of the invention. The blades 16 include a suction side surface 30 and a pressure side surface 32 defined between a leading edge 23 and a trailing edge 25. A spar cap 34 and associated webs 36 are provided internally of the blade 16. A plurality of vortex elements 40 are formed on either or both of the surfaces 30 and 32 in any desired pattern. In the embodiment illustrated in Fig. 2, the vortex elements 40 are depicted on the suction side 30 and arranged so that pairs of the elements 40 define a generally wedge-shaped configuration wherein the individual elements in the pair generate counter-rotating vortices. In an alternate embodiment, the vortex elements 40 may be defined on the blade surface with the same angular orientation (as in Figs. 8 and 11) so as to generate co-rotating vortices.

It should also be appreciated that the particular shape of the individual vortex elements 40 is not a limiting factor. The elements 40 may have a fin-shape, wedge-shape, wing-shape, and any other shape determined to be suitable for modifying the aerodynamic characteristics of the blade.

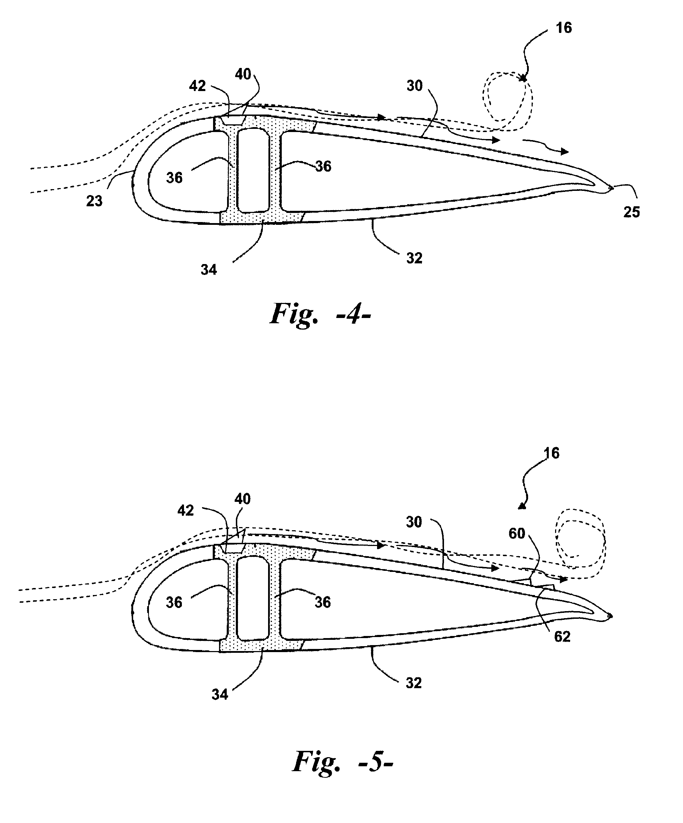

The surfaces 30, 32 of the blade 16 on which the vortex elements 40 are formed has a "neutral" plane that corresponds to the smooth surface of the blade defined between the vortex elements 40. For example, referring to Fig. 3, the vortex element 40 is in a retracted position below the neutral plane of the surface 30. In Fig. 4, the vortex element 40 is in an operational position wherein it protrudes above the neutral plane of surface 30.

In a particular embodiment illustrated for example in Figs. 3 through 10, the vortex elements 40 are "dynamic" in that they are activated or deployed from a retracted position as illustrated in Fig. 3 to an operational position as illustrated in Figs. 4 and 5 wherein the vortex elements 40 protrude above the neutral plane of the surface 30, 32 in which they are formed. The vortex elements 40 may be actuated by any suitable means, including electronic means, pneumatic means, hydraulic means, and so forth. In the embodiment illustrated in the figures, the vortex elements 40 are actuated by pressurized air supplied by an active flow control system, generally 38. In other words, the pressurized air that is typically directed over the blade surface in a conventional active flow control system is utilized to also actuate the vortex elements 40. To accomplish this, in one embodiment the active flow control system 38 may include an air manifold 42 that is supplied with pressurized air when the active flow control system 38 is turned on. The vortex elements 40 are in pneumatic communication with the manifold 42 such that the vortex elements 40 are actuated by the pressurized air supplied to the manifold 42 upon switching on of the active flow control system 38.

It should be appreciated that the active flow control system 38 may include any manner of additional control components not illustrated in the figures or discussed herein in detail. For example, the active flow control system 38 may include any number of sensors that are configured with the wind turbine 10 in general, and particularly with each of the blades 16. These sensors may detect any manner of parameter experienced by the blades 16, such as load, wind strength and direction, stall, and so forth. The sensors may provide an input signal to a feedback control loop that is used to turn the active flow control system 38 on and off as a function of the sensed parameters. Control systems for active flow control systems are known in the art and need not be described in detail herein. Reference is made, for example, to U.S. Patent Application Publication No. 2006/0140760 as an example of a control system that may be modified for use with the present invention.

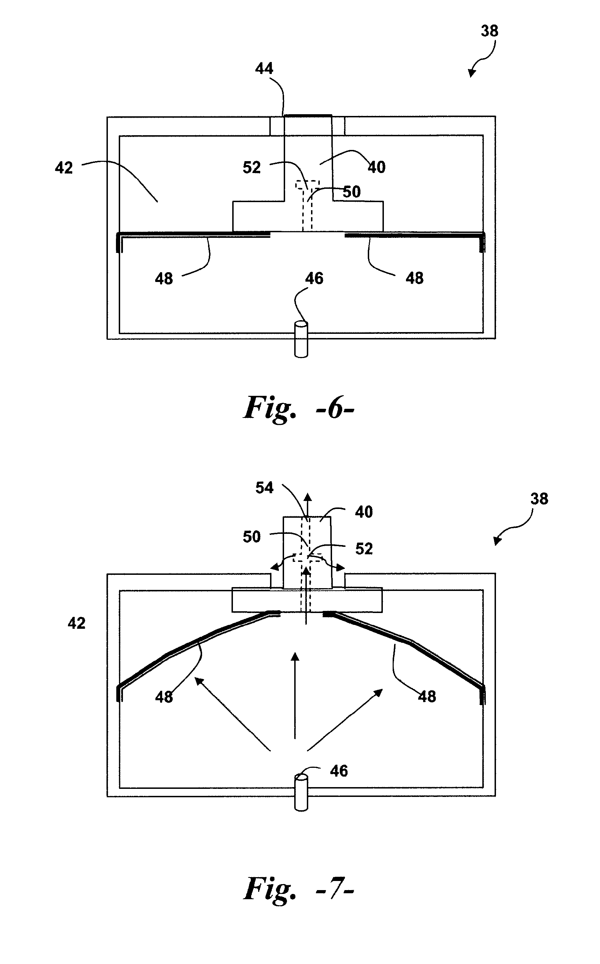

Figs. 6 and 7 depict a particular configuration of a manifold 42 and associated components for actuating the vortex elements 40. In this embodiment, the manifold 42 is defined as a channel-like member that may be embedded into the blade 16, for example in the spar cap 34 so that the top surface of the manifold 42 lies essentially in the neutral plane of the blade surface, as generally depicted in Fig. 2. The vortex elements 40 reside at least partially within the interior space of the manifold 42 in their retracted (unactuated) position, as generally depicted in Fig. 6. Any manner of supply port 46 or other means for introducing pressurized air into the manifold 42 is provided. In the illustrated embodiment, the pressurized air is introduced into a space within the manifold 42 below the vortex elements 40. Referring to Fig. 7, the pressurized air introduced into this space causes the vortex elements 40 to be pushed upwardly within the manifold 42 so that the operational portion of the vortex element 40 extends through the opening 44 in the top of the manifold 42. The opening 44 may be, for example, a slot or similar opening having dimensions sufficient to allow the blade or fin portion of the vortex element 40 to extend through and protrude above the surface of the blade 16.

Still referring to Figs. 6 and 7, the vortex elements 40 may be biased to their retracted position within the manifold 42 by any suitable biasing means, such as a spring, cantilever, or the like. In the illustrated embodiment, the bias is supplied by elastic components 48 that are attached to the bottom of the vortex element 40 and to the side walls of the manifold 42 so as to essentially define a pressurizing volume below the vortex elements 40. As depicted in Fig. 7, the pressurized air causes the elastic components 48 to balloon or expand outwardly, thereby deploying the attached vortex element 40 through the opening 44. Upon terminating the supply of pressurized air to the manifold 42, the elastic components 48 retract and cause the vortex elements 40 to recede within the manifold 42, as depicted in Fig. 6. It should be appreciated that any number of suitable biasing and retracting configurations may be utilized for this purpose.

The vortex elements 40 include a passage 50 through which the pressurized air is directed to implement the active flow control component of the system. In this regard, the vortex elements 40 may be thought of as a nozzle or other distributor for the pressurized active flow air. This passage 50 is illustrated in the figures as internal to the vortex elements 40 and includes an exit 52. As illustrated in Figs. 4 and 5, the pressurized air (illustrated as the solid arrow lines) exits the vortex elements 40 through the openings 52 so as to flow over the surface of the blades 16 towards the trailing edge 25. The passage 50, exit opening 52, and angular orientation of the vortex elements 40 ensure that the active flow control air is directed at a desired skewed exit angle relative to a local blade chord at the location of the vortex element 40. This exit angle is designed so that the active flow control gas produces the desired vortices necessary to prolong flow separation along the blade surface.

Figs. 9 and 10 illustrate another unique embodiment wherein the vortex elements 40 are actuated to an operational position by pressurized air from an active flow control system 38. In this embodiment, the vortex elements 40 are pivotal relative to the upper surface of the manifold 42 along any type of suitable hinge line 56. The hinge mechanism biases the vortex elements 40 to the retracted position illustrated in Fig. 9 wherein they lie essentially flat against the manifold surface. Each of the vortex elements 40 overlies an orifice or port 58. Referring to Fig. 10, upon pressurized air being introduced into the manifold 42 via the ports 46 or other supply lines, the pressurized air exits the manifold 42 via the orifices 58, which causes the vortex elements 40 to pivot relative to the hinge line 56 into their protruding operational position as illustrated in Fig. 10. Once the pressurized air is terminated, the vortex elements 40 are retracted back to the condition illustrated in Fig. 9. It should be appreciated from this particular embodiment that the passage for the pressurized air that causes actuation of the vortex elements 40 is not internal to the vortex elements 40, but is defmed adjacent to the vortex elements 40. Although not particularly illustrated in detail in Figs. 9 and 10, the vortex elements 40 may include any manner of structure that redirects the air exiting from the orifices 58 so as to flow tangentially relative to the blade surface.

Referring again to Fig. 7, the vortex elements 40 may include a top exit 54 in addition to the side exits 52. This top exit 54 may be desired in certain situations on some or all of the vortex elements 40 to generate a particular aerodynamic modification.

It should also be appreciated that the present invention encompasses embodiments wherein the vortex elements 40 are "static" and fixed in their operational protruding position relative to the blade surface. An embodiment of this type of configuration is illustrated, for example, in Fig. 11. In this embodiment, the vortex elements 40 still include a passage 50 that redirects the pressurized air from the manifold 42 at a desired exit angle relative to a local chord of the blade at the respective locations of the vortex elements 40. With this particular configuration, although the vortex elements 40 are not dynamic or actuated by the pressurized air, the elements 40 still serve a function as vortex generators, as well as nozzles or distributors for the active flow control system air.

Referring particularly to Fig. 5, a blade 16 in accordance with aspects of the invention may also include additional vortex generators 60, 62 (static or fixed) downstream of the vortex elements 40 in a direction of air flow over the blade surface. For example, the vortex generators 60, 62 may be disposed closer to the trailing edge 25 of the blade 16 relative to the vortex elements 40. These additional vortex generators may include a first plurality 60 that protrude above the neutral surface of the blade at a chord length of between about 60 percent to about 75 percent past a maximum thickness of the blade. An additional plurality 62 of the vortex generators may be included at a chord length of between about 75 percent to about 90 percent past the maximum thickness of the blade. In certain conditions, these additional vortex generators 60, 62 may enhance the aerodynamic performance of the blade in combination with the effect of the vortex elements 40 and active flow control system air.

Fig. 3 illustrates a blade 16 wherein the active flow control system is turned off and the vortex elements 40 are retracted within the manifold 42. The manifold 42 is embedded within the blade in the area of the spar cap 34 and support webs 36. The dashed lines indicate air flow over the leading edge 23 of the blade towards the trailing edge 25. Flow separation occurs at a chord length between the leading edge 23 and trailing edge 25. Fig. 4 illustrates the same blade 16 with the active flow control system turned on such that pressurized air actuates the vortex elements 40 and is also directed over the surface 30 of the blade 16. As depicted in Fig. 4, the point of flow separation of the air flow is prolonged and moved closer to the trailing edge 25. Thus, the blade 16 generates greater lift.

Fig. 5 illustrates the blade depicted in Fig. 4 with the addition of vortex generators 60, 62, adjacent to the trailing edge 25. As schematically indicated by the dashed lines in Fig. 5, these vortex generators 60, 62 may prolong the onset of flow separation even further than the blade of Fig. 4, thereby generating even more lift with the blade 16.

While the present subject matter has been described in detail with respect to specific exemplary embodiments and methods thereof, it will be appreciated that those skilled in the art, upon attaining an understanding of the foregoing, may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

Various aspects and embodiments of the present invention are defined by the following numbered clauses:
1. A wind turbine blade, said blade comprising:
   a suction side surface and a pressure side surface;
   a plurality of vortex elements formed on at least one of said suction side or said pressure side surfaces; and
   an active flow control system operably configured with said vortex elements so as to direct pressurized air through said vortex elements and along said surface;
   wherein the aerodynamic performance of said blade is modified by a combined effect of said vortex elements and said active flow control system.
2. The wind turbine blade as in clause 1, wherein said vortex elements are dynamic and actuated from a retracted position to an operational position protruding above a neutral surface of said blade.
3. The wind turbine blade as in any preceding clause, wherein said vortex elements are actuated by pressurized air supplied by said active flow control system.
4. The wind turbine blade as in any preceding clause, wherein said active flow control system comprises a pressurized air manifold within said blade, said vortex elements in pneumatic communication with said manifold such that said vortex elements are actuated upon switching on said active flow control system.
5. The wind turbine blade as in any preceding clause, wherein said vortex elements are biased to said retracted position at least partially within said manifold, pressurized air supplied to said manifold overcoming the bias and forcing said vortex elements to said protruding position.
6. The wind turbine blade as in any preceding clause, wherein said vortex elements comprise an elastic component that provides the bias.
7. The wind turbine blade as in any preceding clause, wherein said vortex elements comprise a passage therethrough through which the pressurized air is directed through and out of said vortex elements at a desired exit angle relative to a blade chord.
8. The wind turbine blade as in any preceding clause, wherein said vortex elements are pivotal along a hinge line and lie against said blade surface in said retracted position, the pressurized air from said active flow control system pushing against said vortex elements to cause said vortex elements to pivot upwardly relative to said blade surface.
9. The wind turbine blade as in any preceding clause, wherein said vortex elements are static and fixed relative to said blade surface, said vortex elements comprising air passages defined therethrough through which the pressurized air is directed through and out of said vortex elements at a desired exit angle relative to a blade chord.
10. The wind turbine blade as in any preceding clause, further comprising a plurality of vortex generators disposed on said blade surface downstream of said plurality of vortex elements in a direction of airflow over said blade surface.
11. The wind turbine blade as in any preceding clause, wherein said vortex generators comprise static vanes protruding above a neutral surface of said blade at a first chord length past a maximum thickness of said blade.
12. The wind turbine blade as in any preceding clause, further comprising an additional plurality of vortex generators at a second greater chord length past a maximum thickness of said blade.
13. A wind turbine, said wind turbine comprising a plurality of turbine blades, at least one of said turbine blades comprising:
   a suction side surface and a pressure side surface;
   a first plurality of vortex elements formed on at least one of said suction side or said pressure side surfaces; and
   an active flow control system operably configured with said vortex elements so as to direct pressurized air through said vortex elements and along said surface;
   wherein the aerodynamic performance of said blade is modified by a combined effect of said vortex elements and said active flow control system.
14. The wind turbine as in any preceding clause, wherein said vortex elements are dynamic and actuated from a retracted position to an operational position protruding above a neutral surface of said blade, said vortex elements actuated by pressurized air supplied by said active flow control system.
15. The wind turbine as in any preceding clause, wherein said active flow control system comprises a pressurized air manifold within said blade, said vortex elements in pneumatic communication with said manifold such that said vortex elements are actuated upon switching on said active flow control system.
16. The wind turbine as in any preceding clause, wherein said vortex elements are biased to said retracted position at least partially within said manifold, pressurized air supplied to said manifold overcoming the bias and forcing said vortex elements to said protruding position.
17. The wind turbine as in any preceding clause, wherein said vortex elements are pivotal along a hinge line and lie against said blade surface in said retracted position, the pressurized air from said active flow control system pushing against said vortex elements to cause said vortex elements to pivot upwardly relative to said blade surface.
18. The wind turbine as in any preceding clause, wherein said vortex elements are static and fixed relative to said blade surface, said vortex elements comprising air passages defined therethrough through which the pressurized air is directed through and out of said vortex elements at a desired exit angle relative to a blade chord.
19. The wind turbine as in any preceding clause, further comprising a plurality of vortex generators disposed on said blade surface downstream of said plurality of vortex elements in a direction of airflow over said blade surface.
20. The wind turbine as in any preceding clause, wherein said vortex generators comprise static vanes protruding above a neutral surface of said blade at a chord length of between 60% and 75% past a maximum thickness of said blade, and further comprising an additional plurality of vortex generators at a chord length of between 75% and 90% past a maximum thickness of said blade.

## Claims

1. A wind turbine blade (16), said blade comprising:
a suction side surface (30) and a pressure side surface (32);
a plurality of vortex elements (40) formed on at least one of said suction side or said pressure side surfaces; and
an active flow control system (38) operably configured with said vortex elements so as to direct pressurized air through said vortex elements and rearward along said surface;
wherein the aerodynamic performance of said blade is modified by a combined effect of said vortex elements and said active flow control system.

2. The wind turbine blade (16) as in claim 1, wherein said vortex elements (40) are dynamic and actuated from a recessed position to an operational position protruding above a neutral surface of said blade.

3. The wind turbine blade (16) as in any preceding claim, wherein said vortex elements (38) are actuated by pressurized air supplied by said active flow control system (38).

4. The wind turbine blade (16) as in any preceding claim, wherein said active flow control system (38) comprises a pressurized air manifold (42) within said blade, said vortex elements (40) in pneumatic communication with said manifold such that said vortex elements are actuated upon switching on said active flow control system.

5. The wind turbine blade (16) as in any preceding claim, wherein said vortex elements (40) are biased to said recessed position at least partially within said manifold (42), pressurized air supplied to said manifold overcoming the bias and forcing said vortex elements to said protruding position.

6. The wind turbine blade (16) as in any preceding claim, wherein said vortex elements (40) comprise an elastic component (48) that provides the bias.

7. The wind turbine blade (16) as in any preceding claim, wherein said vortex elements (40) comprise a passage (50) therethrough through which the pressurized air is directed through and out of said vortex elements at a desired exit angle relative to a blade chord.

8. The wind turbine blade (16) as in any preceding claim, wherein said vortex elements (40) are pivotal along a hinge line (56) and lie against said blade surface (30, 32) in said recessed position, the pressurized air from said active flow control system (38) pushing against said vortex elements to cause said vortex elements to pivot upwardly relative to said blade surface.

9. The wind turbine blade (16) as in any preceding claim, wherein said vortex elements (40) are static and fixed relative to said blade surface (30, 32), said vortex elements comprising air passages (50) defmed therethrough through which the pressurized air is directed through and out of said vortex elements at a desired exit angle relative to a blade chord.

10. The wind turbine blade (16) as in any preceding claim, further comprising a plurality of vortex generators (60) disposed on said blade surface (30, 32) downstream of said plurality of vortex elements (40) in a direction of airflow over said blade surface at a chord length of between 60% and 75% past a maximum thickness of said blade.

11. The wind turbine blade (16) as in any preceding claim, further comprising an additional plurality of vortex generators (62) at a chord length of between 75% and 90% past a maximum thickness of said blade.

12. A wind turbine (10), said wind turbine comprising a plurality of turbine blades (16), at least one of said turbine blades in accordance with any one of claims 1 to 11.

13. The wind turbine (10) as in claim 12, wherein all of said turbine blades (16) are in accordance with any one of claims 1 to 11.
